# EUROPÄISCHE PATENTANMELDUNG

(11) **EP 1 265 118 A1**
(43) Veröffentlichungstag der Anmeldung: **11.12.2002**
(21) Anmeldenummer: 01810544.5
(22) Anmeldetag: 05.06.2001
(51) Int. Cl.: G05B 19/418

(54) **Verfahren zur Installationsüberwachung eines mobilen Gerätes**

(71) Anmelder: ABB RESEARCH LTD., 8050 Zürich (CH)
(72) Erfinder: Wimmer, Wolfgang, 5323 Rietheim (CH)
(74) Vertreter: ABB Patent Attorneys

(57) **Zusammenfassung**

Die Erfindung bezieht sich auf ein Verfahren und eine Vorrichtung zur Überwachung und Steuerung eines Installationsprozesses eines mobilen Gerätes (10) in einer Anlage (12). Das Gerät (10) kann an unterschiedlichen Positionen innerhalb der Anlage (12) installiert, mit unterschiedlichen Adressen und mit unterschiedlichen Software Modulen geladen werden, um verschiedene Funktionen innerhalb der Anlage (12) auszuführen. Um einen korrekten Einbau und eine korrekte Verwaltung des Gerätes (10) zu ermöglichen, werden Positionsdaten (16) von dem Gerät (10) automatisch erfaßt und an ein zentrales Datenerfassungsgerät (14) geleitet, das diese und weitere gerätespezifische Kenngrößen (18, 20) verarbeitet, um zumindest die Position und/oder Adresse und/oder Funktion des Gerätes (10) überwachen oder die Datenbank (30) automatisch anpassen zu können.

## Beschreibung

### Technisches Gebiet

Die Erfindung betrifft ein Verfahren zur Installationsüberwachung eines mobilen Gerätes, das in einer Anlage mit mehreren Geräten integrierbar ist, mit einem Datenerfassungsgerät, wobei mindestens zwei Identifikationsparameter dem Gerät eineindeutig zugeordnet sind.

Die Erfindung betrifft weiterhin eine Vorrichtung, die eine Installationssteuerung und -überwachung eines mobilen Gerätes in dem oben beschriebenen Umfeld ermöglicht.

### Stand der Technik

Die Erfindung liegt auf dem Gebiet der automatischen Positionserfassung von mobilen, elektronischen Geräten, die in einem umfassenden System zu unterschiedlichen Zeitpunkten an unterschiedlichen Orten integriert sind und von einem mobilen Datenerfassungsgerät gesteuert und überwacht werden müssen. Zur Identifizierung des Gerätes werden hauptsächlich drei Identifikationsparameter verwendet: erstens, eine Adresse im Rahmen des Kommunikationssystems, zweitens eine Funktion, die das Gerät im Rahmen einer bestimmten Anwendung ausführen soll und drittens der physikalische Ort, an dem das Gerät aufgestellt ist. Die (drei) Identifikationsparameter sind jeweils einem Gerät auf eineindeutige Weise zugeordnet.

Die ersten beiden Identifikationsparameter werden üblicherweise während der Projektierung zugeordnet. Der dritte Identifikationsparameter, die Positionsdaten, werden meistens zu einem späteren Zeitpunkt - nämlich bei Einbau oder Einbindung des Gerätes vor Ort - zugeordnet.

In anderen Fällen können noch weitere Identifikationsparameter bestimmt werden, die eine eineindeutige Zuordnung zu einem Gerät aufweisen. Ein Identifikationsparameter dient also zur Identifizierung des Gerätes. Da aber komplexe und insbesondere prozessteuerungstechnische Anlagen in der Regel sehr fehlersensitiv sind, ist für eine einwandfreie Funktion der Gesamtanlage eine fehlerfreie Steuerung und eine Kontrolle des Installationsvorganges des Gerätes notwendig, um Fehler zu vermeiden, die beispielsweise durch den Einbau des Gerätes an einer falschen Position oder durch eine fehlerhafte Adressierung des Gerätes (und damit fehlerhafter Übertragung von Gerätedaten) entstehen. Die anderen Identifikationsparameter dienen deshalb erfindungsgemäß dazu, zu überwachen, ob die Zuordnung der bisherigen Identifikationsparameter zu dem Gerät auch korrekt erfolgt ist und um den Einbauvorgang des Gerätes weiterhin steuern zu können.

Doch gerade bei Geräten, die häufig gewechselt und an verschiedenen Stellen eingesetzt werden, ist die Überwachung der Positionsdaten zwingend erforderlich. Beispiele für notwendige Kontrollen bei der Installation sollen für Geräte wie mobile Data Logger, Power Quality Monitore oder Störschreiber und dergleichen erfolgen. Es ist aber auch denkbar, den Einsatz von sehr kostenintensiven, modularen Bauteilen eines Systems über ein Datenerfassungsgerät gemäß den Grundprinzipien der Erfindung zu überwachen. Hier sind insbesondere kostenintensive Module eines Computersystems zu nennen, die an einem Arbeitsplatz nur zeitweise benötigt werden und deshalb von verschiedenen Anwendern geteilt werden können. Um solche Geräte und deren Einsatz auch sinnvoll verwalten und warten zu können, ist eine aktuelle Positionserfassung des Gerätes notwendig. Diese erfolgt erfindungsgemäß vorzugsweise automatisch, ohne daß der Anwender über spezifische Kenntnisse verfügen muß, die eine korrekte Zuordnung der Identifikationskenngrößen und des Gerätes ermöglichen.

Bekannte Systeme, die ebenfalls eine automatische Ortserfassung (hier ein Global Positioning System - GPS) verwenden, werden ausschließlich für die Ortsfeststellung von mobilen Bauteilen eingesetzt. Sie dienen dazu, den Benutzer zu informieren, wo sich das Gerät gerade befindet. Erfindungsgemäß wird aber die automatische Positionserfassung nicht zur Unterrichtung eines Benutzers über den Ort eingesetzt, sondern dazu, zu überwachen, ob die Einrichtung eines mobilen Gerätes in einer Anlage korrekt erfolgte ist und um den Installationsprozeß zu automatisieren.

So zeigt insbesondere die US 6208861 ein mobiles Terminal mit GPS Funktion. Hier wird die Bewegungsgeschwindigkeit eines mobilen Kommunikationsterminals erfaßt, um die Bedingungen für die Übertragung über einen Radiokanal zu bewerten. Es findet allerdings keine Überwachung des Einrichtungsvorganges eines Gerätes aufgrund mehrerer ihn identifizierenden Kenngrößen statt.

Weiterhin wird in der US 5952959 ein Erfassungssystem offenbart, das zwei GPS Signale von unterschiedlich plazierten GPS Sendern empfängt und deren relative Position zueinander graphisch darstellt. Auch hier werden die GPS-Signale lediglich als Positionsinformation verwendet.

In der US 613 10 67 ist eine Vorrichtung für Client-Server-Systeme für die Kommunikation im Internet gezeigt, die einen entfernt vom Server befindlichen Sensor identifiziert, indem Information über dessen Position bereitgestellt werden. Eine automatische Überwachung eines Anschlußprozesses eines mobilen Gerätes aufgrund der Zuordnung von mehreren Identifikationsparametern ist hier nicht offenbart.

Aufgabe der vorliegenden Erfindung ist es deshalb, ein sicheres und schnelles Verfahren und eine kostengünstige Vorrichtung zur Verfügung zu stellen, das/die die Kontrolle und Verwaltung des Einsatzes eines mobilen Gerätes innerhalb eines Systems automatisieren und das weiterhin den gerätespezifischen Installations- und Konfigurationsprozeß überwachen kann.

### Darstellung der Erfindung

Diese Aufgabe wird erfindungsgemäß durch ein Verfahren gemäß dem unabhängigen Patentanspruch 1 gelöst Die Aufgabe wird weiterhin durch eine Vorrichtung gemäß dem unabhängigen Patentanspruch 11 gelöst. Weitere vorteilhafte Ausgestaltungen, Aspekte und Details der vorliegenden Erfindung ergeben sich aus den abhängigen Patentansprüchen, der Beschreibung und der beigefügten Zeichnung. Details und Vorteile, die bei der Beschreibung des Verfahrens angeführt werden, gelten gleichermaßen für die erfindungsgemäße Vorrichtung und umgekehrt.

Die Erfindung kennzeichnet sich im Gegensatz zu dem eben dargestellten Stand der Technik dadurch aus, daß bei einem System aus mobilen Geräten und/oder Bauteilen der Einsatz dieser Geräte automatisch gesteuert, verwaltet und überwacht werden kann, indem Positionsdaten als zusätzlicher Identifikationsparameter verwendet werden.

Das erfindunggemäße Verfahren ist dadurch gekennzeichnet, daß ein erster Identifikationsparameter durch die automatische Erfassung von Positionsdaten des Gerätes und/oder eines durch das Gerät bedienten Anlagenteils bestimmt wird, indem das Gerät zumindest zeitweise Signale sendet, die die Positionsdaten betreffen, und indem das Datenerfassungsgerät diese Signale zumindest zeitweise empfängt und mit den weiteren Identifikationsparametern verarbeitet.

Die erfindungsgemäße Vorrichtung ist eine Vorrichtung der eingangs dargestellten Art mit einem Datenerfassungsgerät, einem Verarbeitungsmodul, das die Signale von Positionsdaten und zumindest einem weiteren Identifikationsparameter verarbeitet, wobei das Gerät und/oder ein durch das Gerät bedientes Anlagenteil zumindest zeitweise einen Sender aufweisen, der Signale sendet, die Positionsdaten des Gerätes oder des durch das Gerät bedienten Anlagenteils betreffen und wobei das Datenerfassungsgerät einen Empfänger aufweist, der zum Empfang von Positionsdaten des Senders bestimmt ist.

Der Kerngedanke der Erfindung basiert auf der Idee, daß die aktuelle Position eines mobilen, elektronischen Gerätes automatisch von einem räumlich entfernt befindlichen Datenerfassungsgerät erfaßt werden kann, um unter anderem andere, beispielsweise insgesamt drei, Identifikationsparameter des Gerätes, die beispielsweise zur Kommunikation und/oder Datenübertragung mit dem Gerät eingesetzt werden, zu überprüfen. So kann z.B. eine elektronische Adresse, die dem Gerät zugeordnet worden ist, kontrolliert werden, um eine fehlerhaft adressierte Datenübertragung zu vermeiden. Auch kann die Funktion, die das Gerät ausführen soll (wenn ein Gerät beispielsweise durch variabel ladbare Software Module auf eine bestimmte Anwendung hin "programmiert" wird) anhand der Raumkoordinaten des Gerätes überwacht und/oder automatisch verändert werden. Wird das Gerät nämlich von dem bisherigen Ort an einen neuen Ort versetzt und soll dort eine andere Funktion ausführen, so wird nach der Ortsveränderung automatisch die Funktionalität des Gerätes angepaßt und gegebenenfalls verändert, indem die jeweils passenden Software Module auf das Gerät geladen werden, um es für seinen neuen Einsatzzweck automatisch zu konfigurieren.

Unter einer Anlage im Sinne der vorliegenden Erfindung ist jede zusammenhängende Anordnung von funktionellen Einheiten zu verstehen, beispielsweise von in einem Netzwerk miteinander verbundener Geräte oder in einem gemeinsamen Gerät, beispielsweise in einem Schaltschrank, direkt miteinander verbundener Komponenten.

Vorzugsweise können die Identifikationsparameter zumindest teilweise voneinander unabhängig sein.

Erfindungsgemäß können die sich auf das Gerät beziehenden Datensätze in einer zentralen Datenbank konsistent gehalten werden. Soll das Gerät beispielsweise an einem anderen Ort der Anlage eine neue Funktion ausführen, so wird diese Änderung vorteilhafterweise automatisch erfaßt und die entsprechenden Einträge in der Datenbank werden aktualisiert bzw. konsistent gehalten. Daraufhin kann das mobile Gerät von dem Datenerfassungsgerät automatisch mit neuen, passenden Daten konfiguriert werden. Dementsprechend ist die Erfindung auch auf eine Verwendung des Verfahrens gerichtet, bei der es zur Diagnose von Fehlinstallationen von Geräten dient, indem die konsistent gehaltene Datenbank hinzugezogen wird.

Eine beispielhafte Anwendung des erfindungsgemäßen Verfahrens liegt auf dem Gebiet der dezentralen Erfassung von Meßdaten, die von einem zentralen System verarbeitet werden, um gegebenenfalls weitere, dezentrale Prozesse anzusteuern. Führt ein Energieversorgungsunternehmen z.B. vor Ort - in einem Haushalt - mit einem Data-Logger als mobilem Gerät Lastprofil-Messungen über den Stromverbrauch in einen bestimmten Zeitraum durch, werden diese Daten automatisch dem korrekten Datensatz in der Datenbank zugeordnet. Wird das Gerät daraufhin an einem anderen Ort eingesetzt, erkennt das System den veränderten Einsatzzweck automatisch und führt ein Update der entsprechenden Daten in der Datenbank durch (z.B. Update des Ortes, Update der Funktion etc.).

Weiterhin sind in der medizinischen Informatik transportable, elektronische Geräte bekannt, deren Funktionalität von Anwendung zu Anwendung in einem vorbestimmten Rahmen variieren kann (etwa durch Laden unterschiedlicher Software Module). Das Gerät kann beispielsweise als Signalgeber, als Überwachungssensor oder als komplexeres Diagnosegerät programmiert werden und wird je nach Funktion an unterschiedlichen Stellen innerhalb einer umfassenden Anlage positioniert und mit den jeweils zugehörigen, entsprechenden Bauteilen der Anlage elektrisch verbunden.

Generell ist das Verfahren und die Vorrichtung für alle dezentral und variabel einsetzbaren Komponenten eines modularen Systems anwendbar, deren Funktionalität und/oder Adresse und/oder deren weitere Identifikationsparameter über die räumliche Lage gekennzeichnet ist.

Erfindungsgemäß ist das Gerät vorzugsweise mit einem Ortskoordinaten-Sender ausgestattet, der Signale über die räumliche Position des Gerätes an ein entfernt befindliches Datenerfassungsgerät sendet. Das Datenerfassungsgerät ist mit einem Ortskoordinaten-Empfänger ausgerüstet, um die Daten zu empfangen.

Wahlweise können die Ortskoordinaten-Schnittstellenmodule dauerhaft und fest in den jeweiligen Geräten installiert sein oder nur temporär, um etwa lediglich anfänglich den initialen Einsatz eines Gerätes zu überwachen (z.B. Einsatz als sogenanntes Snapshot GPS).

Die Erfindung sieht weiterhin vor, den Ortskoordinaten-Sender entweder direkt in dem Gerät zu installieren oder in einem unmittelbar mit diesem Gerät gekoppelten Anlagenteil, um die Position des Gerätes indirekt zu erfassen.

Vorteilhafterweise ist die Kommunikation zwischen dem Gerät und dem Datenerfassungsgerät, das vornehmlich als zentrales Gerät fungiert und damit typischerweise räumlich getrennt vom Gerät aufgestellt ist, berührungslos, beispielsweise durch eine Funkverbindung.

In einer weiteren, vorteilhaften Ausführungsform der Erfindung ist das Datenerfassungsgerät nicht als zentrales Modul vorgesehen, sondern ist in einem Anlagenteil integriert. Damit läßt sich die Übertragung und Verarbeitung der Positionsdaten vereinfachen und verkürzen. In dieser Ausführungsform sind alle potentiellen Funktionen bzw. Anwendungen des Gerätes bereits in dem Gerät vorprojektiert bzw. vorinstalliert. Der Ort des Gerätes dient lediglich als Umschaltkriterium von einer bisherigen Anwendung auf eine neue.

Wird ein portables, multifunktionales Gerät auch durch seine räumliche Anordnung (z.B. Steckplatz) in einer Anlage (z.B. Rack) definiert, dann kann erfindungsgemäß dessen Installation überwacht werden.

### Kurze Beschreibung der Zeichnung

Weitere Vorteile, Merkmale und alternative Ausführungsformen der Erfindung ergeben sich aus der nachfolgenden detaillierten Figurenbeschreibung, die in Zusammenhang mit der Zeichnung zu lesen ist, in der:

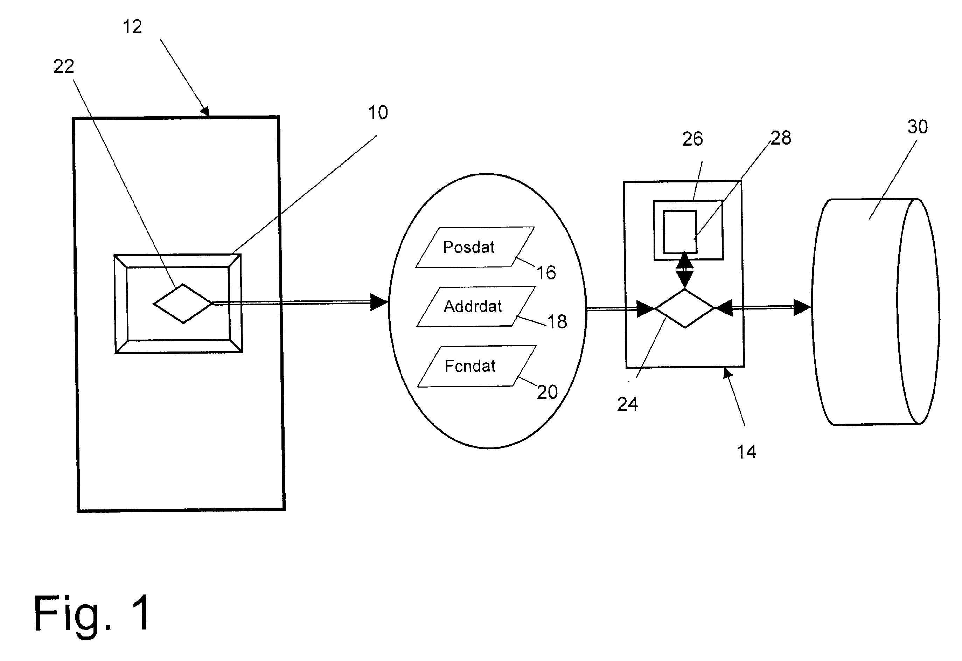

Fig. 1 eine schematische Darstellung von Elementen einer erfindungsgemäßen Vorrichtung ist.

### Wege zur Ausführung der Erfindung

In Figur 1 ist das im allgemeinen mit 10 bezeichnete Gerät dargestellt. Das Gerät 10 ist in einer Anlage 12 integriert. Ein Datenerfassungsgerät 14 ist als zentrales, transportables Modul ausgebildet, das eine berührungslose Kommunikationsverbindung zu dem Gerät 10 aufweist. In der bevorzugten Ausführungsform der Erfindung betrifft die Anlage 12 ein Prozeßleitsystem, das aus mehreren mobilen Geräten 10 besteht, beispielsweise einem Diagnose- oder Überwachungsgerät.

Das Gerät 10 wird durch mehrere Identifikationsparameter 16, 18, 20 identifiziert:
durch Positionsdaten 16,
durch Adressdaten 18 und
durch Funktionsdaten 20.
Das heißt, daß jeder dieser Identifikationsparameter 16, 18, 20 in einer eineindeutigen Relation zu dem Gerät 10 steht.

Durch die kumulative Zuordnung von mehreren Identifikationsparametern 16, 18, 20 zu einem Gerät 10, kann erfindungsgemäß die Sicherheit des Systems erhöht werden und es kann eine Überwachung von Prozessen vorgenommen werden, die für die Installation des Gerätes 10 notwendig sind, indem eine bestehende Zuordnung von einem Identifikationsparameter und dem Gerät 10 aufgrund der jeweils anderen Identifikationsparameter abgeglichen wird.

Das Gerät 10 weist in der bevorzugten Ausführungsform einen Ortskoordinaten-Sender 22 auf, der Signale über die Positionsdaten des Gerätes 10 sendet. Diese Signale werden von dem Datenerfassungsgerät 14 empfangen, insbesondere von einem Ortskoordinaten-Empfänger 24. Die von dem Ortskoordinaten-Empfänger 24 empfangenen Signale werden einem Verarbeitungsmodul 26 zugeführt. Das Verarbeitungsmodul 26 kann die Identifikationsparameter 16, 18, 20 auf unterschiedliche Weise verarbeiten:
1. Das Verfahren wird eingesetzt, um eine bereits bestehende Adresse eines Gerätes 10 auf Korrektheit hin zu überprüfen, indem die anderen beiden Identifikationsparameter, die Funktionsdaten 20 und die Positionsdaten 16, unter Zugriff auf eine Datenstruktur und/oder Datenbank 30 auf Übereinstimmung ihrer Kenngrößen verglichen werden.
2. Das Verfahren wird verwendet, um eine beliebige Zuordnung einer Adresse zu einem Gerät 10 bzw. zu einem beliebigen Gerät vom gleichen Typ zu ermöglichen bei gleichzeitiger Überprüfung der anderen Identifikationsparameter des Gerätes 10, indem die Positionsdaten 16 mit den Funktionsdaten 20 unter Zugriff auf eine Datenstruktur und/oder Datenbank 30 auf Übereinstimmung ihrer Kenngrößen verglichen werden.
3. Das Verfahren wird verwendet, um bei einem bereits installierten Gerät 10 zu prüfen, ob es an der richtigen Position innerhalb der Anlage 12 eingebaut worden ist.
4. Das Verfahren kann insbesondere im Falle, daß das unter Punkt 1 dargestellte Vorgehen einen Fehler ergab, zur weiteren Fehlerbehebung eingesetzt werden. Denn das Verarbeitungsmodul 26 kann die aktuelle Position des Gerätes 10 und dessen aktuelle Funktion und Adresse mit einem Schreibzugriff auf die Datenbank 30 aktualisieren, so daß wieder ein konsistenter Zustand hergestellt ist.
5. Das Verfahren kann angewendet werden, um bei Geräten 10, die zu unterschiedlichen Zeitpunkten an unterschiedlichen Positionen innerhalb der Anlage 12 eingesetzt werden können, eine automatische Aktualisierung aller Identifikationsparameter 16, 18 und 20 auszuführen. Wird nämlich ein Gerät 10 von einer alten Position an eine neue Position verschoben, so kann erfindungsgemäß und vorteilhafterweise automatisch ein entsprechendes "Nachziehen" der anderen Identifikationsparameter 18, 20 (als Veränderung der Daten in der Datenbank 30) ausgeführt werden.

In einer weiteren Ausführungsform der Erfindung weist das Verarbeitungsmodul 26 zusätzlich eine Überwachungseinheit 28 auf, die die soeben beschriebene Konsistenzprüfung und Konsistenzerhaltung der Datensätze in der Datenbank 30 vornimmt. Dies kann erfindungsgemäß gewährleistet werden, da mehrere Identifikationsparameter 16, 18, 20 vorgesehen sind. Bei Abweichung nur eines Parameters und Übereinstimmung der restlichen Identifikationsparameter wird der abweichende Parameter als fehlerhaft diagnostiziert und die entsprechenden Einträge werden in der Datenbank 30 verändert. Weichen alle Parameter voneinander ab, kann eine Prioisierung der Parameter hinsichtlich ihrer Fehlerwahrscheinlichkeit durchgeführt werden. Hier könnte beispielsweise festgelegt werden, daß die Adressdaten 18 ein hohes Fehlerpotenzial aufweisen, da ein Benutzungsfehler hinsichtlich einer falschen Adresseingabe relativ häufig auftritt; während die Ortskoordinaten-Daten 16 ein geringes Fehlerpotenzial aufweisen, da sie automatisch erzeugt werden. Gemäß dieser Prioisierung würden bei Abweichung der Adressdaten 18 von den Positionsdaten 16, die Adressdaten 18 an die Positionsdaten 16 angeglichen werden.

Mit der erfindungsgemäßen Überwachung kann vorteilhafterweise erreicht werden, daß Fehler, die sich aufgrund einer falschen Zuordnung von Identifikationsparametern ergeben, sicher ausgeschlossen werden können. Dies ist dann relevant, wenn beispielsweise das Gerät 10 mit einer spezifischen Software geladen werden soll, damit es eine bestimmte Funktion ausführen kann. Wird nun die Adresse falsch eingegeben, so kommt es bisher zu einer Fehlladung bzw. Fehlzuweisung. Dies kann erfindungsgemäß unterbunden werden, indem aufgrund der Abgleichung mit dem weiteren Identifikationsparameter, nämlich mit den Positionsdaten 16, eine automatische oder durch den Anwender zu bestätigende, halbautomatische Korrektur der Adresseingabe erfolgt.

In einer alternativen Ausführungsform werden neben den drei in Figur 1 dargestellten Identifikationsparameter 16, 18, 20 noch weitere gerätespezifische Parameter eingesetzt, um die Funktionalität des erfindungsgemäßen Verfahrens zu erhöhen. Dies ist vor allem dann sinnvoll, wenn das Verfahren als Diagnose- und Fehlerbehebungstool eingesetzt wird. Dann können nämlich aufgrund der zusätzlichen Parameter weitere Aussagen über den potentiellen Fehler und dessen Behebungsmöglichkeiten abgeleitet werden.

Als vorteilhaft erweist es sich ferner, daß die Konfiguration des gesamten Systems automatisiert und hinsichtlich der Fehlerwahrscheinlichkeit reduziert werden kann.

### Bezugszeichenliste

- 10: Gerät
- 12: Anlage
- 14: Datenerfassungsgerät
- 16: Positionsdaten
- 18: Adressdaten
- 20: Funktionsdaten
- 22: Ortskoordinaten-Sender
- 24: Ortskoordinaten-Empfänger
- 26: Verarbeitungsmodul
- 28: Überwachungseinheit
- 30: Datenbank

## Patentansprüche

1. Verfahren zur Kontrolle und Steuerung eines Installationsprozesses eines mobilen Gerätes (10), das in einer Anlage (12) mit mehreren Geräten (10) integrierbar ist, mit einem Datenerfassungsgerät (14), wobei mindestens zwei Identifikationsparameter dem Gerät (10) eineindeutig zugeordnet sind,
**dadurch gekennzeichnet, daß**
ein erster Identifikationsparameter durch die automatische Erfassung von Positionsdaten (16) des Gerätes (10) und/oder eines durch das Gerät (10) bedienten Anlagenteils bestimmt wird, indem das Gerät (10) zumindest zeitweise Signale sendet, die die Positionsdaten (16) betreffen, und indem das Datenerfassungsgerät (14) diese Signale zumindest zeitweise empfängt und mit dem weiteren Identifikationsparameter verarbeitet.

2. Verfahren nach Anspruch 1,
**dadurch gekennzeichnet, daß**
das Verfahren auf der Verarbeitung und Abstimmung von drei Identifikationsparametern basiert, wobei als zweiter Identifikationsparameter Adressdaten (18) des Gerätes (10) und als dritter Identifikationsparameter Funktionsdaten (20) des Gerätes (10) bestimmt werden.

3. Verfahren nach einem der vorstehenden Ansprüche,
**dadurch gekennzeichnet, daß**
die Positionsdaten (16) mit einem System zur automatischen Erfassung von Ortskoordinaten (22, 24) ermittelt werden.

4. Verfahren nach einem der Ansprüche 1 bis 3, **dadurch gekennzeichnet, daß** die Ortskoordinaten durch Prozessieren von Daten erfolgt, die von einem Satellitensystem zur Positionsbestimmung ausgestrahlt werden.

5. Verfahren nach einem der vorstehenden Ansprüche,
**dadurch gekennzeichnet, daß**
das Verfahren auf einem Datenbanksystem, insbesondere einer relationalen Datenbank (30), aufsetzt, die Einträge zu jedem Gerät (10) und den Identifikationsparametern (16, 18, 20) aufweist.

6. Verfahren nach einem der vorstehenden Ansprüche,
**dadurch gekennzeichnet, daß**
das Gerät (10) und/oder das Datenerfassungsgerät (14) mit einer Datenbank (30) in Datenaustausch steht.

7. Verfahren nach einem der vorstehenden Ansprüche,
**dadurch gekennzeichnet, daß**
das Gerät (10) und das Datenerfassungsgerät (14) zumindest in deren Betriebszustand räumlich voneinander getrennt positioniert sind und eine berührungslose Kommunikationsverbindung, insbesondere eine Funkverbindung, aufweisen.

8. Verfahren nach einem der vorstehenden Ansprüche,
**dadurch gekennzeichnet, daß**
die Identifikationsparameter (16, 18, 20) zumindest teilweise voneinander unabhängig sind.

9. Verfahren nach einem der vorstehenden Ansprüche,
**dadurch gekennzeichnet, daß**
das mobile Gerät (10) mehrere Funktionen ausführen kann und insbesondere zur dezentralen Erfassung von Meßdaten und/oder zur Ansteuerung bzw. Ausführung dezentraler Prozesse dient.

10. Verwendung des Verfahrens nach zumindest einem der vorstehenden Ansprüche 5 mit 8,
**dadurch gekennzeichnet, daß**
das Verfahren zur Diagnose von Fehlinstallationen des Gerätes (10) und/oder zur Fehlerbehebung von Fehlinstallationen verwendet wird, indem die jeweils aktuellen Identifikationsparameter des Gerätes (10) automatisch mit den Datensätzen in der Datenbank (30) konsistent gehalten werden.

11. Vorrichtung zur Kontrolle und Steuerung einer Installation eines mobilen Gerätes (10), das in einer Anlage (12) mit mehreren Geräten (10) angeordnet ist, mit:
- einem Datenerfassungsgerät (14),
- einem Verarbeitungsmodul (26), das die Signale von Positionsdaten (16) und zumindest einem weiteren Identifikationsparameter verarbeitet,
**dadurch gekennzeichnet, daß**
das Gerät (10) und/oder ein durch das Gerät (10) bedientes Anlagenteil
- zumindest zeitweise einen Sender (22) aufweisen, der Signale sendet, die Positionsdaten (16) des Gerätes (10) oder des durch das Gerät (10) bedienten Anlagenteils betreffen und, daß
- das Datenerfassungsgerät (14) einen Empfänger (24) aufweist, der zum Empfang von Positionsdaten (16) des Senders (22) bestimmt ist.

12. Vorrichtung nach Anspruch 11,
**dadurch gekennzeichnet, daß**
das Gerät (10) und/oder das Datenerfassungsgerät (14) mobil ist.

13. Vorrichtung nach Anspruch 10 oder 11,
**dadurch gekennzeichnet, daß**
das Verarbeitungsmodul (26) mit einer Überwachungseinheit (28) ausgestattet ist, die an eine Datenbank (30) angeschlossen ist und zur Überwachung einer korrekten Installation des Gerätes (10) und/oder zur Diagnose von Fehlinstallationen und/oder zur Behebung von Fehlinstallationen bestimmt ist.

14. Vorrichtung nach einem der Ansprüche 10 bis 13, **dadurch gekennzeichnet, daß** das Gerät (10) einen Satellitenempfänger zur Positionsbestimmung durch einen oder mehrere Satelliten, die Daten zur Bestimmung von Ortskoordinaten aussenden, aufweist.
